# EUROPEAN PATENT SPECIFICATION

(11) **EP 2 864 236 B1**
(45) Date of publication and mention of the grant of the patent: **03.01.2018**
(21) Application number: 13733127.8
(22) Date of filing: 06.06.2013
(51) Int. Cl.: B67D 3/04

(54) **DISCHARGE DEVICE FOR LIQUID**
ENTLEERVORRICHTUNG FÜR FLÜSSIGKEIT
DISPOSITIF DE DÉCHARGE POUR LIQUIDE

(30) Priority: 21.06.2012 US 201213529675
(43) Date of publication of application: 29.04.2015
(73) Proprietor: The Procter & Gamble Company, Cincinnati, OH 45202 (US)
(72) Inventor: CAMPBELL, Jason Craig, Chicago, Illinois 60607 (US); HAGUE, Philip Edwin, Chicago, Illinois 60607 (US); SAUER, Michael Allen, Chicago, Illinois 60607 (US); HART, Christopher Steven, Chicago, Illinois 60661 (US)
(74) Representative: Siddiquee, Sanaul Kabir
(86) International application number: PCT/US2013/044402
(87) International publication number: WO 2013/191915

(56) References cited:
- EP-A1- 1 201 601
- WO-A1-91/18827
- GB-A- 2 381 258
- US-A- 2 764 385
- US-A1- 2007 256 444

## Description

### FIELD OF THE INVENTION

This invention relates to discharge devices.

### BACKGROUND OF THE INVENTION

The number of consumers who purchase liquid goods, such as detergent, wine, and other consumables, in bulk has continued to increase over the past decade. A typical detergent container might contain approximately 2 L of liquid detergent. A typical wine bottle might contain approximately 750 mL. To reduce the cost to consumers related to packaging, marketers of liquids such as detergents and wine are increasing their offerings of larger sizes of containers for such fluids. As the containers become larger, they tend to become more and more difficult to pour because the person dispensing the liquid must have adequate wrist strength to controllably pour the liquid. To overcome these difficulties, marketers now offer to consumers containers having press tap discharge devices that allow the consumers to dispense fluid without having to lift the container. It is now not uncommon to see detergents, wine, cooking oils, and other bulk liquids packaged in containers having press tap discharge devices.

Press tap discharge devices must have some sort of valve that can be opened and closed positively. It is particularly important for the press tap discharge devices to be able to close tightly, so that no leakage through the valve occurs. A leaky valve can cause many problems including drips that might permanently stain an underlying material such as a granite countertop or carpeted floor or simply result in spillage of an expensive product such as a fine wine or high quality detergent composition. Further, a leaky valve can result in a pathway for oxygen to enter the container and oxidize the contents thereof. Oxidation can cause a wine to spoil. To ensure that these adverse effects do not occur, marketers attempt to provide tightly closing valves.

One difficulty that can occur with a tightly closed valve is that the force the consumer must apply to open the valve can be greater than desired. For instance, the press tap discharge device employed in large containers of TIDE liquid laundry detergent, marketed by The Procter & Gamble Co., employs a flexible bulb that is pressed to open the valve. If the bulb is relatively stiff, and hence capable of requiring a high force to open the valve, it can be difficult for consumers to open the valve. This is particularly true for consumers who have limited finger strength, perhaps due to arthritis, aging, or other physical challenge. With this limitation in mind, there is a continuing unaddressed need for a press tap discharge device that can provide for positive closure but it also easy for consumers to open. A discharge device according to the preamble of claim 1 is known from EP 1 201 601 A1.

### SUMMARY OF THE INVENTION

A discharge according to claim 1.

### BRIEF DESCRIPTION OF THE DRAWINGS

Fig. 1 is a drawing of a discharge device.
Fig. 2 is a cross section of the discharge device shown in Fig. 1, as marked in Fig. 1, the sealing member being in a closed position.
Fig. 3 is a cross section of the discharge device shown in Fig. 2, the sealing member being in an open position.
Fig. 4 is a drawing of a discharge device having the resilient member connected to the finger support section.
Fig. 5 is a drawing of a discharge device having the resilient member connected to the finger support section.
Fig. 6 is a drawing of a discharge device having the resilient member connected to the conduit.
Fig. 7 is a drawing of a discharge device.
Fig. 8 is a cross section of a connector, conduit, and discharge device, the cross section taken as marked in Fig. 9.
Fig. 9 is a perspective view of a connector, conduit, and discharge device.

### DETAILED DESCRIPTION OF THE INVENTION

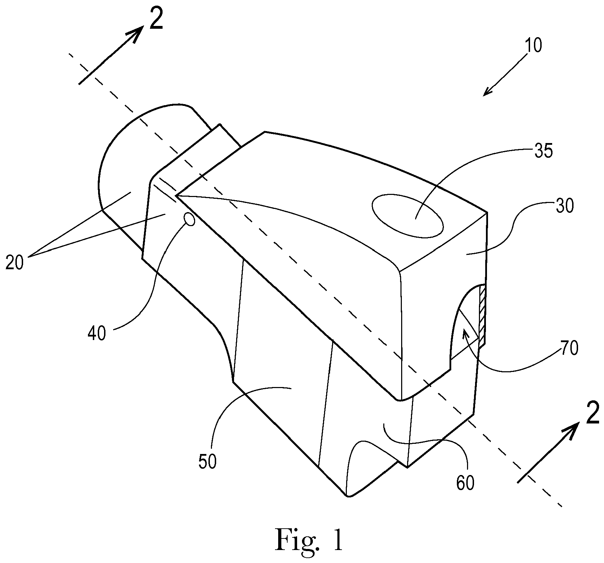

Figure 1 illustrates a discharge device 10 in perspective view. The discharge device can be practical for connecting with a large volume container for liquid, such as detergent, wine, oil, or like liquid. In use, the consumer can activate the discharge device 10 by pressing on the top of the actuating lever 30. Since the actuating lever can be connected to the conduit 20 via a fulcrum 40, the user gains a mechanical advantage in opening the valve, thereby making the valve easy to open. A finger support section 60 is provided, the consumer can activate the discharge device 10 squeezing between her thumb and index finger the actuating lever 30 and the finger support section 60. The consumer can make the squeeze with her thumb on the top of the actuating lever and the side of her index finger anchored in the finger support section 60. Alternatively, the consumer can make the squeeze with her thumb on the top of the actuating lever 30 and the pad on the tip of her index finger anchored in the finger support section 60. Alternatively, the consumer can make the squeeze with her thumb anchored in the finger support section 60 and use the pad one of her other fingers, such as her index finger to push on the actuating lever 30. By having the consumer squeeze to actuate the actuating lever 30, the net reaction force on the press tap discharge device 10 can be nil or near zero. This can help reduce the tendency for tipping of the container to which the discharge device 10 is connected.

The press tap discharge device 10 can be attached to a container. The discharge device 10 can comprise a connector that is operably engageable with a container, the connector being by way of non-limiting example a threaded connector or a snap-in connector. The discharge device comprises a conduit 20. The conduit 20 can be in fluid communication with the connector. The conduit 20 can define a closed channel for flow. The flow can be that of a liquid, for example, a liquid laundry detergent, wine, cooking oil, or other similar. The conduit 20 can be sized and dimensioned to provide for flow of a viscous liquid. The conduit 20 can have an inner diameter between about 1 mm and about 20 mm. In use, the consumer can actuate the actuating lever 30 which permits flow from the container to exit out an outlet of the discharge device 10.

The discharge device 10 has an actuating lever 30 that is connected about a fulcrum 40. The fulcrum 40 is connected to the conduit 20. The actuating lever 30 can provide mechanical advantage to the consumer when she opens the discharge device 10. It can be convenient to have the location where the consumer presses on the actuating lever to be further away from the fulcrum 40 than where the actuating lever drives opening and closing of the discharge device. Arranged as such, the consumer gains mechanical advantage towards opening and closing the discharge device.

It can be advantageous to have the fulcrum connected to the conduit 20 to provide for some degree of rigidity and security to the mechanical interaction between the actuating lever 30 and resilient member and/or stem within the valve housing 50. The actuating lever 30 could be connected to some other element, perhaps a frame that holds a container to which the discharge device 10 is attached. However, such an arrangement might provide for a competent interaction between the actuating lever 30 and components that interact with the actuating lever 30 to open and close the discharge device 10.

As shown in Fig. 1, the discharge device 10 has a finger support section 60 that is partially nested within a recess 70 in the actuating lever 30. By partially nesting the finger support section 60 in a recess 70 in the actuating lever 30, the potential pinch location that might exist between the actuating lever 30 and the finger support section 60 is blocked from inadvertent entry of a consumer's finger. Further, such an arrangement can be practical in that it can hide the underlying mechanics of the discharge device 10, which can present a more aesthetic impression to the consumer.

As part of the discharge device 10, a valve housing 50 is in fluid communication with the conduit 20. The valve housing 50 contains a sealing member slideably engaged within the valve housing 50. The actuating lever 30 is operably engaged with a sealing member, the sealing member being within the valve housing 50. Within the valve housing 50 can be the mechanism that opens and closes the discharge device 10. In use, the consumer actuates the actuating lever 30 to drive movement within the valve housing 50 to open the discharge device 10. Releasing the actuating lever 30 allows the mechanism within the valve housing 50 to close.

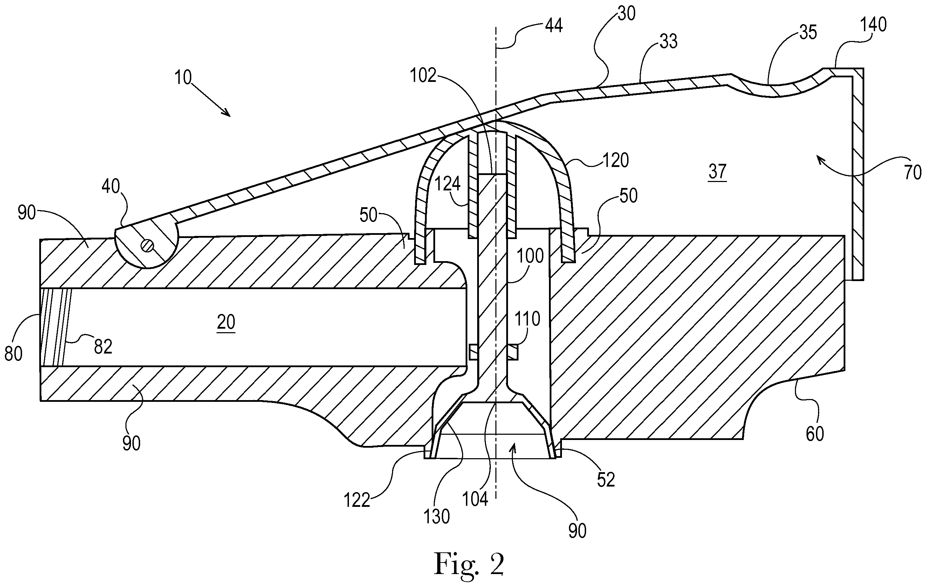

A cross section of the discharge device 10 shown in Fig. 1 is shown in Fig. 2, the cross section taken as indicated in Fig. 1. As shown in Fig. 2, the discharge device 10 can have a connector 80. The connector 80 can be a thread 82 or threads 82. The connector 80 can operably engage with the container directly, for instance by screwing into an outlet in the container or screwing into a component of the container, or a compression fitting. The connector 80 can operably engage with the container indirectly, for instance through another component that is engaged with the container. The connector 80 can be a snap-locking connect, like that known in the art of quick connect connections for dispensing liquids.

The fulcrum 40 is connected to the conduit 20. The fulcrum 40 can be a small round cylinder of steel having a diameter of about 0.5 mm to about 2 mm. As shown in Fig. 2, the fulcrum 40 can pass through the wall 90 of the conduit 20 without passing through the closed channel for flow in the conduit 20. The fulcrum 40 can be a location of attachment of the actuating lever 30 and the conduit 20. The fulcrum 40 can be locked into place using any of the known approaches for immobilizing a hinge or pin in a housing. For example, if the fulcrum 40 is small cylinder of steel or other kind of axle, the ends of the fulcrum can be deformed such that the ends have larger diameter than the portion of the cylinder between the ends. The fulcrum 40 can be locked into place using cotter pins.

The fulcrum 40 can be a bendable material, such as neoprene, rubber, or like material, that connects the actuating lever 30 with the conduit 20, the bendable material being able to restrain the end of the fulcrum 40 from moving away from the conduit 20. Alternatively, the actuating lever 30 can be provided with a hook or hooks that operably engage with the connector 20, the hook(s) providing for rotational movement about the fulcrum 40.

In such an arrangement, the fulcrum 40 can be attached to the conduit 20 via an adhesive or be bonded to the fulcrum 40. To gain the maximum mechanical advantage, the tip 140 of the actuating lever 30 can be located as far away as practical from the fulcrum 40.

The fulcrum 40 can be provided by a separate part attached to the conduit 20. The actuating lever 30 can be rotatably mounted to the fulcrum 40 so that the actuating lever 30 can rotate about the fulcrum 40 as the tip 140 of the actuating lever 30 moves downwardly.

The conduit 20 can be a pipe through which the liquid from the container flows as it travels from the container to the valve housing 50 and to the outlet 90 from the valve housing 50. The conduit 20 can be made of plastic, such as nylon, polyethylene, or polypropylene, or metal, such as copper or stainless steel. The conduit 20 need only have sufficient durability to with stand the bending moment that might be applied to the conduit 20 during use or due to incidental contact with the conduit during storage and/or transport and the stress applied to the conduit 20 when the consumer actuates the actuating lever 30. The conduit 20 can be chemically compatible with the fluid that is to be dispensed. By chemically compatible it is meant that the liquid passing through the conduit 20 does not significantly degrade or react with the conduit 20. For liquids such as cooking oil, wine, or other ingestible goods, the conduit 20 can be food safe. The conduit 20 can be in fluid communication with the valve housing 50.

The conduit 20 and the valve housing 50 can be made to be in fluid communication via a threaded connection, a solvent weld, compression fitting, or they can be integral with one another in that they are molded as a single piece of plastic or metal or such that part of the conduit 20 and part of the valve housing 50 are formed from a single piece of plastic or metal, as might occur if halves of the structures are formed and then snapped, glued, or welded together.

A resilient member 120 is operably engaged with a sealing member 130. The resilient member 120 can be operably engaged with the sealing member 130 by a stem 100 contained within the valve housing 50. As shown in Fig. 2, the interior portion of the resilient member 120 oriented towards the sealing bead 122 can have a hollow cylindrical housing in which the stem 100 is mounted. The stem 50 can be held in the housing by compression provided by that part of the resilient member. The stem 50 can pass through a valve guide 110. The valve guide 110 can be an annulus, for example a plastic annulus, through which the stem 50 passes, the annulus being fixedly connected to the valve housing. The annulus can have a low profile so as to provide limited resistance to flow of liquid. The valve guide 110 need not completely and continuously surround the stem 50. For example, a plurality of projections can extend from within the valve housing 50 to restrain movement of the stem off axis 44. The valve guide 110 can help to keep the stem 100 properly aligned within the valve housing 50 so as to provide linear movement of the stem 100 within the valve housing 50.

The resilient member 120 is operably engaged with the actuating lever 30 and bias the actuating lever 30 to be in a closed position. The bias can be an active force applied by the resilient member 120 upwards onto the actuating lever, for instance if the actuating lever is restrained in some manner from upward movement in some manner. The bias can be a neutral bias in which the actuating lever 30 just rests on the resilient member 120 and the only force applied to the resilient member 120 is that from part of the weight of the actuating lever 30. The actuating lever 30 can be in a closed position, as shown in Fig. 2. The actuating lever 30 can have an open position in which the actuating lever 30 is pressed down to deform the resilient member 120.

Referring to Fig. 2, when the resilient member 120 is unpressed, the resilient member 120 can seat within the valve housing 50 and a sealing bead 122 connected to the stem 100 can be compressed against the valve housing 50 so that no liquid can flow from the container with which the discharge device 10 is used. The resilient member 120 can apply an upward force to the stem 100 to pull the sealing member 130 in towards the valve housing 50 to close discharge device 10.

When pressure is applied to the resilient member 120, for instance by applying the force to the actuating lever 30, the actuating lever 30 can rotate about the fulcrum 40, which deforms inwardly the resilient member 120, and moves the stem 100 along an axis 44 to unseat the sealing bead 122 from the valve housing 50. The valve housing 50 can have a conical seating 52. When the resilient member 120 is depressed, liquid can flow through the conduit 20 into the valve housing 50, around the stem 100 and sealing member 130 and through the outlet 90.

If needed, a valve guide 110 can be provided to provide for straight-line movement of the stem 100. The valve guide 110 can be secured to the interior of the valve housing 50. A smaller and more streamlined the valve guide 110 can provide for a greater flow rate through the outlet 90.

The stem 100 can form a mechanical connection between the resilient member 120 and the sealing member 130 such that the resilient member 120 and the sealing member 130 are operably engaged with one another. The stem 100 can be formed of a plastic material or a metal material. The stem 100 can have a first end 102 and a second end 104 opposite the first end 102. The first end 102 can be adjacent the resilient member 120 and protrude downwardly from the resilient member 120 to the sealing member 130. The first end 102 of the stem 100 can be seated in the resilient member 120. The second end 104 can be seated, affixed to, or an integral part with the sealing member 130. When the discharge device 10 is in a closed position, the stem 100 can be in tension. The tensile force in the stem 100 can be generated by the resilient member 120 exerting an upward force on the stem 100 and the sealing member 130 being restrained from upward movement by the conical seating 52.

In an alternative embodiment in which the stem 100 is connected to the actuating lever 30, either directly or indirectly, the resilient member 120 can exert an upward force on the actuating lever 30 which in turn transfers that force towards the location of connection of the stem 100 with the actuating lever 30. That can generate the tensile force in the stem 100 which pulls in the sealing member 130.

The sealing member 130 seals the outlet 90 of the valve housing 50 and provides for controllable repetitive opening and closing of the discharge device 10. The sealing member 130 can be conically shaped, frusto-conically shaped, or shaped otherwise such that the sealing member 130 conformably fits within a conical seating 52 provided as part of the valve housing 50. The outer edge of the sealing member 130 can fit flush with the conical seating 52 when the discharge device 10 is in a closed position. The sealing member 130 can be made of a plastic material such as polypropylene, nylon, polyethylene, polyethylene terephthalate, or other similarly formable plastic material.

When the resilient member 120 is depressed, liquid is released from the outlet 90. Specifically, when the resilient member 120 is depressed, the resilient member can act to move the stem 100 that is movable along axis 44 so that the outlet 90 is opened. The stem 100 can be restrained from lateral movement by the valve guide 110. A rebound force provided by the resilient member 120 can act on the stem 100 to pull up the sealing member 130 to close the outlet 90.

The resilient member 120 can have a hollow cylindrical housing for holding part of the stem 100. The stem 100 can have its first end 102 seated in the resilient member 120 and its second end 104 engaged with the sealing member 130. The sealing member 130 provides for controlling repetitive opening and closing of the discharge device 10. The sealing member 130 and stem 100 can be an integrally formed with one another or can be two distinct parts that are connected to one another with via an adhesive, solvent weld, or other technique for connecting two parts.

The resilient member 120 can be a hollow flexible press bulb operatively engaged with the stem 100, as shown in Fig. 2. The resilient member can be the same as that sold with large containers of liquid TIDE having a press tap, marketed by The Procter & Gamble Co., Cincinnati, OH, U.S.A. The resilient member 120 can be capable of repetitive large deformation under direct or indirect (e.g. through actuating lever 30) manually applied pressure but subsequently capable of resuming its original shape when the pressure is removed. The resilient member 120 can be formed from an elastomeric polymer such as ethylene vinyl acetate, metallocene polyethylene, or polybutylene terephthalate. The resilient member 120 can be a hollow flexible hemispherical press bulb having a diameter between about 10 mm and about 25 mm. The resilient member 120 can be a hollow flexible hemispherical press bulb having a diameter of about 18 mm.

The resilient member 120 can be a spring or an elastomeric polymeric material. A spring or elastomeric polymeric material might be practical if the resilient member is located away from the stem 100. Such a spring or elastomeric polymeric material can be mounted between the actuating lever 30 and one of the conduit 20 or the finger support section 60, if present.

The resilient member 120 can be connected to the valve housing 50. In one embodiment, the resilient member 120 is a hollow hemisphere shape of pliable material. The resilient member 120 can be partially embedded in the valve housing 50 in a channel formed therein, as shown in Fig. 2. The resilient member 120 can be mounted to the valve housing 50 using an adhesive or can be bonded to the valve housing 50. In embodiments in which the stem is connected to the actuating lever 30, the resilient member 120 can be mounted in or to the finger support section 60 or the conduit 20.

The actuating lever 30 can be connected about the fulcrum 40. The actuating lever can be formed from any material that can provided in a shape having sufficient rigidity to transfer force from the user's finger to the resilient member 120 without bending beyond the yield point of the material or buckling. The actuating lever 30 can provide for a mechanical advantage factor greater than about 1.1. The actuating lever 30 can provide for a mechanical advantage factor greater than about 1.2. The actuating lever 30 can provide for a mechanical advantage factor greater than about 1.5. The actuating lever 30 can provide for a mechanical advantage factor greater than about 2.0. The mechanical advantage can be quantified as the ratio between the distance from the end of the actuating lever to the fulcrum 40 to the distance between the location where the actuating lever 30 contacts the resilient member 120 and the fulcrum 40.

The actuating lever 30 can extend from the fulcrum 40 to or past the resilient member 120. If the actuating lever 30 only extends to the resilient member 120, then there may be no mechanical advantage garnered. Even if no mechanical advantage is garnered, the actuating lever 30 may still help the consumer depress the resilient member 120 since the actuating lever 30 can present a large bearing surface upon which the consumer can press. Having a large bearing surface can be beneficial in that for a particular force required to open the discharge device 10 the stress in the consumers finger can be lower.

The actuating lever 30 can have a recess 70 that fits around one or more of parts of the conduit 20, part of the valve housing 50, or part of the finger support section 60. In operation, force is applied by the user to the actuating lever 30 somewhere along the actuating lever 30 to rotate the actuating lever 30 about the fulcrum 40. Applying force near the tip 140 can provide for greater mechanical advantage for actuating the actuating lever 30 and moving the resilient member 120 to open the outlet 90. The actuating lever 30 can have a substantially flat top surface 33 to which the user can apply force. The actuating lever 30 can comprise a finger indent 35 sized and dimensioned to conformably fit with an adult human finger. The finger indent 35 can be oriented on a side of the actuating lever 30 oriented away from the sealing member 130.

The actuating lever 30 can be provided with a pair of sidewalls 37 that extend downwardly from the lateral edges of the top surface 33 of the actuating lever 30. The sidewalls 37 can extend downwardly in the direction of movement of actuating lever 30 so as to provide a shield extends down from the top surface 33 to cover at least part of the one or more of the conduit 20, the valve housing 50, and/or finger support section 60. Together, the top surface 33 and sidewalls 37 provide for a recess 70 into which least part of the one or more of the conduit 20, the valve housing 50, and/or finger support section 60 can be nested. The finger support section 60 is partially nested in the recess 70 in the actuating lever 30 when the sealing member 130 is in an open position. The sidewalls 37 can be formed of the same material as the actuating lever 30 and be formed integrally therewith.

As shown in Fig. 2, the finger support section 60 can be partially nested within the recess 70 in the actuating lever 30 when the sealing member 130 is in a closed position as well. Arranged as such, a potential pinch location that could exist between the actuating lever 30 and the finger support section 60 and/or valve housing 50, and/or conduit 20 can be shielded by sidewalls 37, which can prevent the user's fingers from becoming pinched therein.

The discharge device 10 can comprise a finger support section 60. The finger support section 60 can extend from the valve housing 50. The finger support 60 section can be sized and dimensioned to substantially conform with an adult human index finger lengthwise. In use, the user can anchor the side of her index finger lengthwise, for example along the side or bottom of the length of her index finger, with the finger support section 60 and depress the actuating lever 30 with her thumb. The finger support section 60 can provide support for the user's finger as she makes a pinching movement to open the outlet 90. The reaction force from the finger support section 60 can be a direction opposite to the direction the user applies force to open the outlet 90. As such, little or no net force is applied to the discharge device 10. Without a finger support section 60, force applied by the user to depress the actuating lever could create a torque in the conduit 20, which could break or crack the conduit or could break components upstream from the conduit 20. Further, without a finger support section 60, force applied by the user to depress the actuating lever could create a torque that might tip the container to which the discharge device is attached.

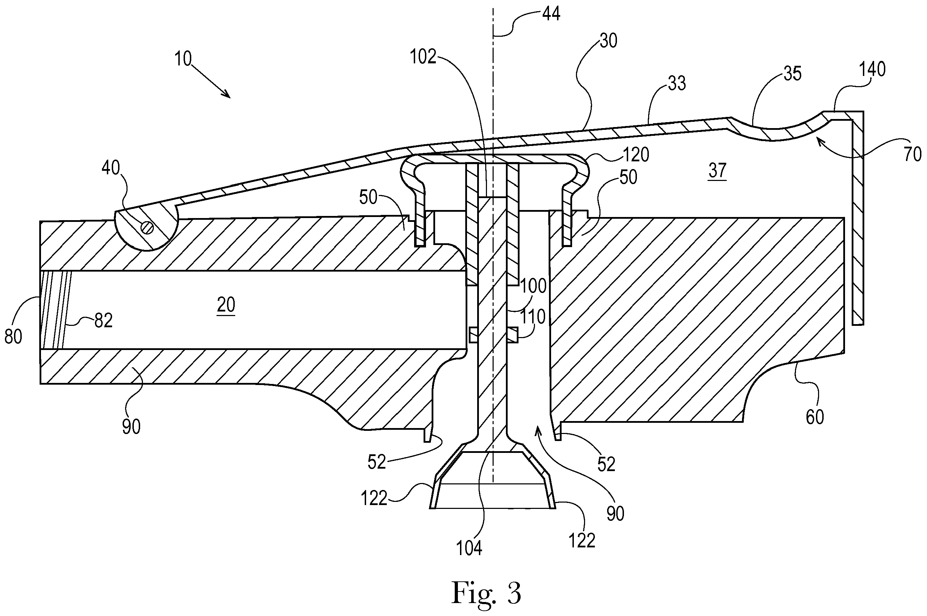

Fig. 3 illustrates the discharge device 10 shown in Fig. 2, the difference being that the sealing member 130 is in an open position. The sealing member 130 is opened by depressing the actuating lever 30. When the actuating lever 30 is pushed down by the consumer, the resilient member 120 is deformed downwardly, which drives movement of the stem 100 to move the sealing member 130 away from the seating, which can be a conical seating 52.

As shown in Fig. 3, when the actuating lever 30 is depressed, at least part of the finger support section 60 can fit into the recess 70 of the actuating lever 30 and accompanying side walls 37 that can extend from the actuating lever 30.

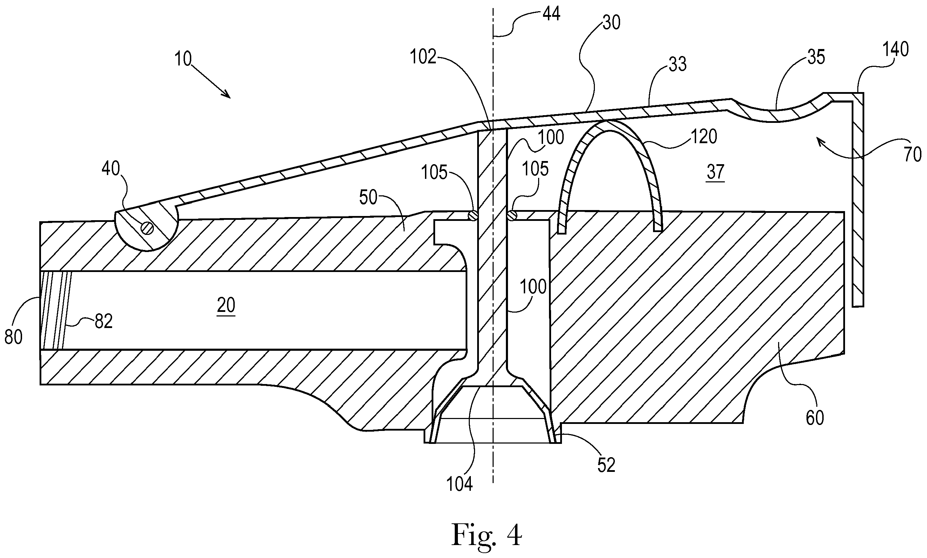

Alternative embodiments of the discharge device 10 are contemplated. For instance, the resilient member 120 need not drive movement of the stem 100. For instance, as shown in Fig. 4, the resilient member 120 can be connected to the finger support section 60. In such an arrangement, the resilient member 120 helps to resist movement of the actuating lever 30 and can bias the actuating lever 30 to be in a position such that the sealing member 130 is in a closed position. Movement of the sealing member 130 can be provided for by a stem 100 that connects the sealing member 130 with the actuating lever 30, with an appropriate seal, for instance by a O-ring 105, provided between the stem 100 and the valve housing 50 proximal where the stem 100 exits the valve housing 50 so that the stem 100 is slideably engaged with the valve housing 50 and liquid cannot leak through the seal under typical liquid pressures.

The resilient member 120 can be a hollow flexible press bulb or a block of resilient material such as rubber, rubber foam, solid elastomer, or other like material. If mechanical advantage for the actuating lever 30 is desired, the resilient member 120 can be positioned between tip 140 of the actuating lever 30 and the stem 100 of the valve housing 50. The resilient member 120 can be mounted to the finger support section in a channel if, for example, the resilient member is a hollow hemispherical button.

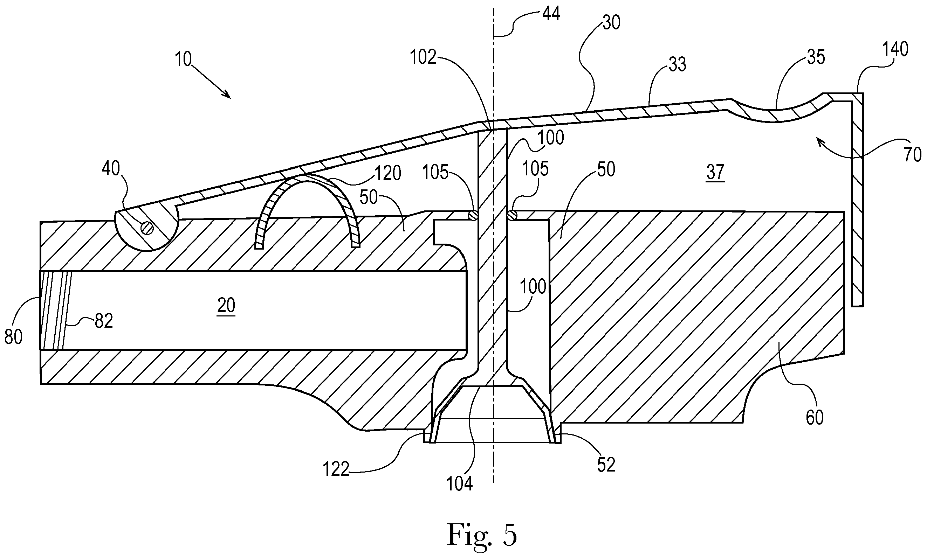

The resilient member 120 can be connected to the conduit 20, as shown in Fig. 5. Such an arrangement can provide more mechanical advantage for actuating lever 30 since the resilient member 120 is closer to the fulcrum 40. In such an arrangement, the resilient member 120 helps to resist downward movement of the actuating lever 30. The connection between the stem 100 and the actuating lever 30 can be made strong enough to withstand the tensile force that is exerted on the stem 100 to keep the valve closed.

Movement of the sealing member 130 can be provided for by a stem that connects the sealing member 130 with the actuating lever 30, with an appropriate seal, for instance by an O-ring 105, provided between the stem 100 and the valve housing 50 proximal where the stem 100 exits the valve housing 50. The resilient member 120 can be a vented hollow flexible press bulb or a block of resilient material such as rubber, rubber foam, solid elastomer, or other like material. If mechanical advantage for the actuating lever 30 is desired, the resilient member 120 can be positioned between tip 140 of the actuating lever 30 and the stem 100 of the valve housing 50.

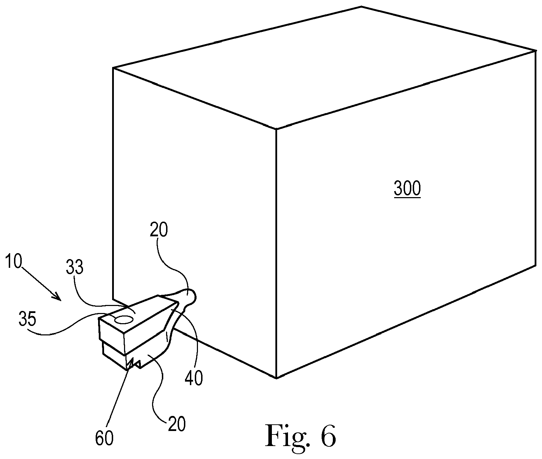

The discharge device 10 can be attached to a container 300, as shown in Fig. 6. The discharge device 10 can be provided with an exterior thread that fits in an opening of the container 300 that has complementary threads. The discharge device 10 can have a flange at the upstream end of the conduit 20 and a collar cap can be mounted downstream of the flange, the collar cap being able to be screwed to an opening on the container. The discharge device 10 can be connected to a container 300 in the manner that the press tap dispenser employed in large sizes of TIDE liquid detergent, marketed by The Procter & Gamble Co., Cincinnati, OH, U.S.A., the difference being that the discharge device disclosed herein is attached to the container 300. The container 300 can be provided with a vent 310 to facilitate liquid dispensing, as is known in the art.

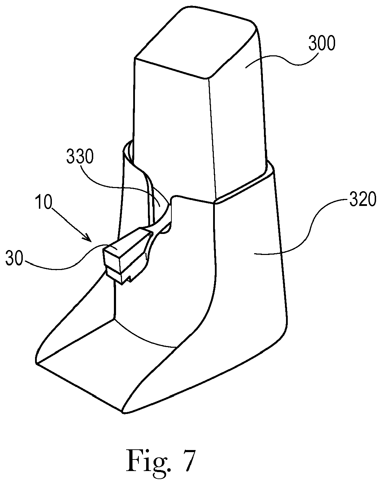

The discharge device 10 can be attached to a container 300, as shown in Fig. 7. In such an embodiment, the container 300 can sit inverted on a pedestal 320 and the conduit 20 can extend from out of the housing 330 of the pedestal. Upstream of the conduit 20, can be a connecter for attaching the conduit to the container 300 in a leak-proof manner. The discharge device 10 can be designed so that the conduit 20 has a higher elevation head than the sealing member 130, in use. This can provide for complete drainage of liquid from the container 300.

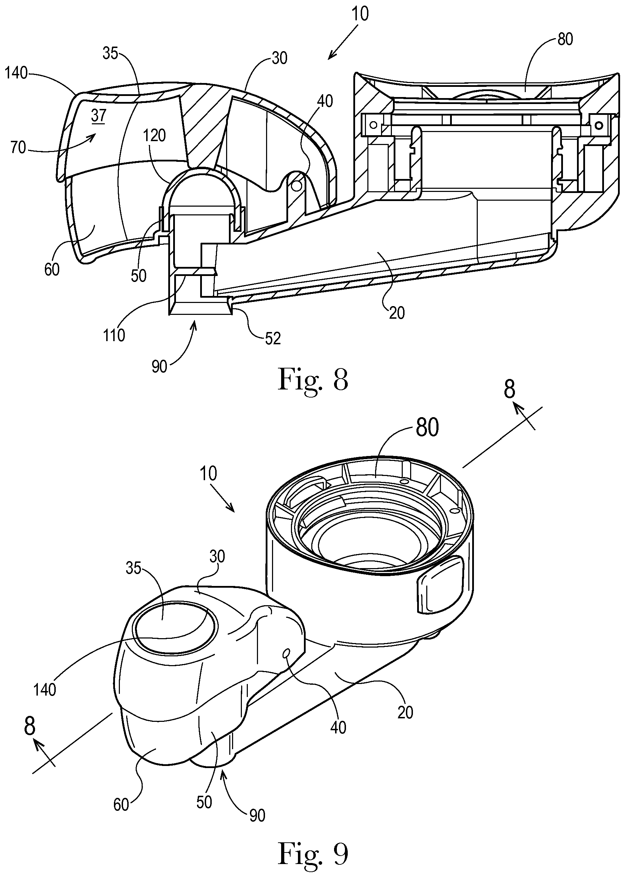

A cross sectional view of a discharge device 10 is shown in Fig. 8, the cross section taken as indicated in Fig. 9. In one embodiment, it can be practical to fabricate the discharge device 10 so that the distance between the fulcrum 40 and the centerline of the resilient member to be about 25 mm, the distance between the fulcrum 40 and the centerline of the finger indent 35 is about 42 mm, and the distance between the fulcrum 40 and the tip 140 is about 59 mm. As shown in Fig. 8, the conduit 20 can be sloped from the connector 80 towards the outlet 90. A stem 100 and a sealing member 130 can be provided in the embodiments shown in Figs. 8 and 9 in the manner illustrated in Fig. 2 or as otherwise disclosed herein.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A discharge device (10) comprising:
a conduit (20) defining a closed channel for flow;
a valve housing (50) in fluid communication with said conduit wherein said valve housing contains a sealing member (130) slideably engaged within said valve housing;
an actuating lever (30) connected about a fulcrum (40), said fulcrum connected to said conduit, said actuating lever operably engaged with said sealing member;
and a resilient member (120) operably engaged with said actuating lever and biasing said actuating lever to maintain said sealing member to be in a closed position, wherein the resilient member (120) has a hollow hemisphere shape of pliable material;
**characterised in** a finger support section (60) partially nested within a recess (70) in said actuating lever (30) when said sealing member is in an open position, wherein said finger support section extends from said valve housing (50).

2. The discharge device according to Claim 1, wherein said resilient member is connected to said conduit or said valve housing.

3. The discharge device according to Claim 1 or 2, wherein said resilient member is connected to said finger support section.

4. The discharge device according to any one of Claims 1 to 3, wherein a finger support section is partially nested within a recess in said actuating lever when said sealing member is in a closed position, wherein said finger support section extends from said valve housing.

5. The discharge device according to Claim 2, wherein said resilient member is connected to said conduit.

6. The discharge device according to any one of the preceding claims, wherein said sealing member is connected to a stem (100) and said resilient member is a flexible press bulb operably engaged with said stem.

7. The discharge device according to any one of the preceding claims, wherein said lever provides a mechanical advantage factor greater than 1.1.

8. The discharge device according to any one of the preceding claims, wherein said conduit has a higher elevation head than said sealing member in use.

9. The discharge device according to any one of the preceding claims, wherein said resilient member is a spring or an elastomeric material.

## Patentansprüche

1. Ausflussvorrichtung (10), umfassend:
eine Leitung (20), die einen geschlossenen Kanal für den Fluss bestimmt;
ein Ventilgehäuse (50) in Fluidaustausch mit der Leitung, wobei das Ventilgehäuse ein Dichtelement (130) enthält, das gleitend in das Ventilgehäuse eingreift;
einen Betätigungshebel (30), der an einem Drehpunkt (40) verbunden ist, wobei der Drehpunkt mit der Leitung verbunden ist, wobei der Betätigungshebel betriebsmäßig mit dem Dichtelement in Eingriff steht;
und ein elastisches Element (120), das betriebsmäßig mit dem Betätigungshebel in Eingriff steht und den Betätigungshebel vorspannt, um das Dichtelement in einer geschlossenen Position zu halten, wobei das elastische Element (120) eine hohle Halbkugelform aus biegsamem Material aufweist;
**gekennzeichnet durch** einen Fingerstützenabschnitt (60), der teilweise in einer Vertiefung (70) in dem Betätigungshebel (30) eingebettet ist, wenn sich das Dichtelement in einer offenen Position befindet, wobei sich der Fingerstützenabschnitt von dem Ventilgehäuse (50) erstreckt.

2. Ausflussvorrichtung nach Anspruch 1, wobei das elastische Element mit der Leitung oder dem Ventilgehäuse verbunden ist.

3. Ausflussvorrichtung nach Anspruch 1 oder 2,
wobei das elastische Element mit dem Fingerstützenabschnitt verbunden ist.

4. Ausflussvorrichtung nach einem der Ansprüche 1 bis 3,
wobei ein Fingerstützenabschnitt teilweise in einer Vertiefung in dem Betätigungshebel eingebettet ist, wenn sich das Dichtelement in einer offenen Position befindet, wobei sich der Fingerstützenabschnitt von dem Ventilgehäuse erstreckt.

5. Ausflussvorrichtung nach Anspruch 2, wobei das elastische Element mit der Leitung verbunden ist.

6. Ausflussvorrichtung nach einem der vorstehenden Ansprüche, wobei das Dichtelement mit einem Stamm (100) verbunden ist und das elastische Element ein flexibler Presskolben ist, der betriebsmäßig mit dem Stamm in Eingriff steht.

7. Ausflussvorrichtung nach einem der vorstehenden Ansprüche, wobei der Hebel einen mechanischen Überhöhungsfaktor von mehr als 1,1 bereitstellt.

8. Ausflussvorrichtung nach einem der vorstehenden Ansprüche, wobei die Leitung bei Verwendung einen Kopf aufweist, der höher als das Dichtelement angeordnet ist.

9. Ausflussvorrichtung nach einem der vorstehenden Ansprüche, wobei das elastische Element eine Feder oder ein elastomeres Material ist.

## Revendications

1. Dispositif de distribution (10) comprenant :
un conduit (20) définissant un canal fermé pour un écoulement ;
un logement de valve (50) en communication fluidique avec ledit conduit, dans lequel ledit logement de valve contient un élément d'obturation (130) en prise de manière coulissante au sein dudit logement de valve ;
un levier d'actionnement (30) relié autour d'un point d'appui (40), ledit point d'appui étant relié audit conduit, ledit levier d'actionnement étant en prise de manière fonctionnelle avec ledit élément d'obturation ;
et un élément élastique (120) en prise de manière fonctionnelle avec ledit levier d'actionnement et sollicitant ledit levier d'actionnement pour maintenir ledit élément d'obturation afin qu'il soit dans une position fermée, dans lequel l'élément élastique (120) a une forme d'hémisphère creuse de matériau pliable ;
**caractérisé par une** section de support de doigt (60) partiellement imbriquée au sein d'un évidement (70) dans ledit levier d'actionnement (30) lorsque ledit élément d'obturation se trouve dans une position ouverte, dans lequel ladite section de support de doigt s'étend à partir dudit logement de valve (50).

2. Dispositif de distribution selon la revendication 1, dans lequel ledit élément élastique est relié audit conduit ou audit logement de valve.

3. Dispositif de distribution selon la revendication 1 ou 2,
dans lequel ledit élément élastique est relié à ladite section de support de doigt.

4. Dispositif de distribution selon l'une quelconque des revendications 1 à 3,
dans lequel une section de support de doigt est partiellement imbriquée au sein d'un évidement dans ledit levier d'actionnement lorsque ledit élément d'obturation se trouve dans une position fermée, dans lequel ladite section de support de doigt s'étend à partir dudit logement de valve.

5. Dispositif de distribution selon la revendication 2, dans lequel ledit élément élastique est relié audit conduit.

6. Dispositif de distribution selon l'une quelconque des revendications précédentes, dans lequel ledit élément d'obturation est relié à une tige (100) et ledit élément élastique est une poire souple à presser en prise de manière fonctionnelle avec ladite tige.

7. Dispositif de distribution selon l'une quelconque des revendications précédentes, dans lequel ledit levier fournit un facteur de gain mécanique supérieur à 1,1.

8. Dispositif de distribution selon l'une quelconque des revendications précédentes, dans lequel ledit conduit a une charge altimétrique plus élevée que ledit élément d'obturation en cours d'utilisation.

9. Dispositif de distribution selon l'une quelconque des revendications précédentes, dans lequel ledit élément élastique est un ressort ou un matériau élastomère.
